# EUROPEAN PATENT APPLICATION

(11) **EP 1 638 082 A2**
(43) Date of publication of application: **22.03.2006**
(21) Application number: 05019205.3
(22) Date of filing: 01.11.2001
(51) Int. Cl.: G10L 19/02, G10L 19/04

(54) **Digital content playback apparatus**

(30) Priority: 02.03.2001 US 796691
(62) Divisional of application: 01309293.7
(71) Applicant: Samsung Electronics Co., Ltd., Yeongtong-gu Suwon-si, Gyeonggi-do (KR)
(72) Inventor: Kim, Hong-kee, Suwon-city Kyungki-do (KR); Choi, Sung-pil, Seoul (KR)
(74) Representative: Robinson, Ian Michael

(57) **Abstract**

A digital content playback apparatus is provided comprising a receiver configured to receive encoded digital content, a Bit Sliced Arithmetic Coding (BSAC) decoder that decodes the received digital content, an inverse quantizer that performs inverse quantization on the decoded digital content, and a frequency/time mapper that converts the inverse quantized digital content from frequency domain to time domain.

## Description

The present invention relates to a digital content playback apparatus and more particularly to a digital audio playback apparatus.

Many suggestions have been made for an audio signal encoding method that can provide increased compression of the audio signal with good fidelity.

The MPEG/audio standard or the AC-2/AC-3 method provides audio quality which is most similar to the sound produced by compact discs, by reducing the bit rate by one sixth or one eighth from the bit rate of a conventional digital encoder, i.e., generally in the range from 64Kbps to 384Kbps.

Much research has gone into ways to provide high fidelity audio at reduced bit rates. One significant result is MPEG-2 Advanced Audio Coding (AAC) which was selected to be an International Standard. MPEG-2 AAC was also recommended by an experts group as a method that could provide high fidelity audio at a bit rate of 64Kbps.

In encoders which employ conventional encoding methods, audio data is encoded by an encoding method which is set in accordance with a fixed bit rate.

Portable digital audio players are constructed to play audio files generated by a conventional encoding method by downloading a file from a computer or a vending machine. However, since portable digital audio players are designed to have a small size for the convenience of the carrier, it is practically impossible to extend the memory capacity of a recording medium beyond a predetermined extent. In other words, portable digital audio players have a limited memory capacity.

Generally, portable digital audio players have a memory of limited capacity, such as 16, 32 or 64 megabytes, which limits the size and number of audio files that can be stored in portable digital audio players.

In order to download a digital audio file generated by the conventional encoding methods into a portable digital audio player, a user has to select a digital audio file within a memory limit of the digital audio player. For example, if 29 megabytes of files are already stored in the recording medium of a digital audio player which has a memory capacity of 32 megabytes, the user is only able to download an additional audio file that will fit within the remaining free bytes, i.e. within 3 megabytes. In the event that the user's desired audio file is 4 megabytes in size, the user cannot download the audio file, which means the free bytes are not efficiently utilised.

The 4-megabyte audio file could be downloaded if another file larger than 1 megabyte is deleted. However, this causes inconvenience to the user since the deleted file will no longer be available.

Generally, it is desired to improve the digital content playback apparatus. As described above, conventional digital audio players and audio file generators do not satisfy the demand of users who want to reduce the size of digital audio files even if that means a degradation of audio quality. In other words, users usually find the conventional digital audio player or the audio file generator generating the audio files according to conventional encoding methods to be inconvenient, since the users are not allowed to adjust the size of data or bit rates as they wish.

According to the present invention there is provided an apparatus as set forth in the appended claims. Preferred features of the invention will be apparent from the dependent claims, and the description which follows.

In one aspect of the invention there is provided an apparatus for playing digital audio, the apparatus comprising storage means for storing digital audio data, playback means for playing audio data stored in the storage means, means for receiving audio signals and processing means. The processing means is configured for processing audio signals, received by the means for receiving audio signals, to produce digital audio data, having a selectable bitrate or file size, and store said digital audio data in the storage means.

Said digital audio data is preferably in a layered format. More preferably, said digital audio data is in a bit sliced arithmetic coding format.

The means for receiving audio signals preferably comprises means for receiving digital audio signals and the processing means is configured to convert received digital audio signals, having a format other than the format employed for said digital audio data, into the format employed for said digital audio data.

Preferably, the processing means is configured to truncate received digital audio signals, having the employed for said digital audio data, to produce said digital audio data.

Preferably, the means for receiving audio signals comprises means for receiving audio signals from the Internet.

Preferably, the processing means includes user input means for setting the said selectable bitrate or file size.

The storage means and the playback means may be comprised in a portable digital audio player with the processing means and the means for receiving audio signals are comprised in a personal computer.

Embodiments of the present invention will now be described, by way of example, with reference to the accompanying drawings, in which:
Figure 1 is a block diagram of a computer having an audio editor according to the present invention;
Figure 2 is shows an example of a menu screen provided by a menu providing portion of the audio editor shown in Figure 1;
Figures. 3A ^{~} 3D show an example of editing menu including an extraction rate selection menu;
Figure 4 is a flowchart illustrating a first process of extracting data on a computer according to the present invention;
Figure 5A is a block diagram showing a first digital audio player according to the present invention;
Figure 5B shows an example of an editing menu including an extraction rate selection menu successively provided when an editing function in the digital audio player shown in Figure 5A is selected;
Figure 6 is a flowchart illustrating an example of the extraction of data in the digital audio player shown in Figure 5A;
Figure 7 is a block diagram showing elements of a bit sliced encoder of a bit sliced codec employed in the present invention;
Figure 8 is a view illustrating a bit sliced coding process performed by the bit sliced encoder shown in Figure 7;
Figure 9 is a view showing the structure of a layered bit stream generated by the bit sliced coding process; and
Figure 10 is a block diagram showing elements of the bit sliced decoder of the bit sliced codec employed in an embodiment of the present invention.

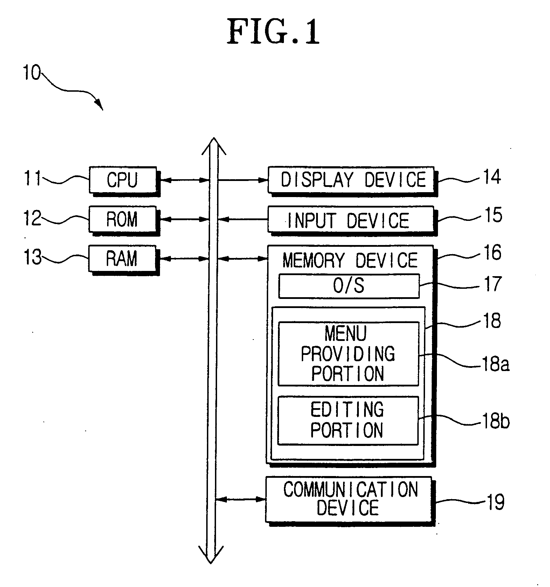

As shown in Figure 1, a computer 10 includes a central processing unit (CPU) 11, a ROM 12, a RAM 13, a display device 14, an input device 15 such as a mouse and/or a keyboard, a memory device 16, and a communication device 19.

The memory device 16 stores an operating systems (OS) 17 such as Windows98, Windows2000, etc. and an audio editor program 18.

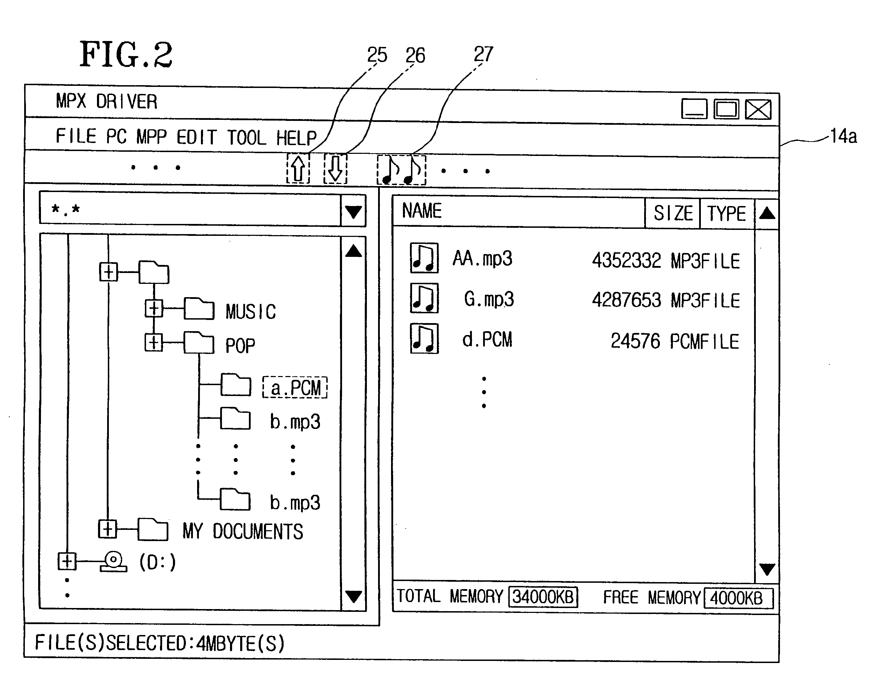

The audio editor program 18 provides a menu for editing audio files with the support of the OS 17, and performs processes corresponding to a selection made by a user. The audio editor program 18 includes a menu providing portion 18a, and an editing portion 18b. The menu providing portion 18a provides a screen that shows various menus of audio editing when the audio editor program 18 is executed on the computer 10. An example of the menu screen of the menu providing portion 18a is shown in Figure 2.

The editing portion 18b performs processes according to the selection made from the menu provided by the menu providing portion 18a. The editing portion 18b includes a bit sliced codec program, i.e., Bit Sliced Arithmetic Coding (BSAC), which performs a layered bit sliced coding of the digital audio data.

Preferably, the audio editor program 18 is constructed such that it supports viewing and selecting of the files stored in the memory device 16 of the computer 10 and also an external device which is connected to a communication port such as a parallel port or a serial port.

For example, the menu providing portion 18 provides an environment setup menu from which a communication port of the computer 10 can be selected, and the editing portion 18b shows the list of files stored in the external device connected to a communication port and the list of files stored in the computer 10, on the same screen for comparison.

Furthermore, it is preferable that the audio editor program 18 is constructed to play the edit-completed audio file on the computer 10. That is, the bit sliced codec program of the audio editor program 18 preferably further includes a decoder for decoding a file generated by the BSAC method.

As shown in Figure 2, in a window 14a on the display device 14 which is displayed by the audio editor program 18, a list of files stored in the memory device 16 of the computer 10 is shown in the left half of the window 14a, while the list of files stored in a external device is shown in the right half of the window 14a. For example, when the external device is a portable digital audio player, the file list stored in the memory portion of the portable digital audio player is shown together with the file list of the computer 10.

A "FILE" menu provides access to command items such as file selecting, file downloading, file uploading, file opening, file saving, and environment setup, etc.

An "EDIT" menu provides access to file editing functions.

Button widgets, including a download button 25, an upload button 26, and a play button 27, which bear icons indicating their functions, are displayed in the window 14a below the menu bar.

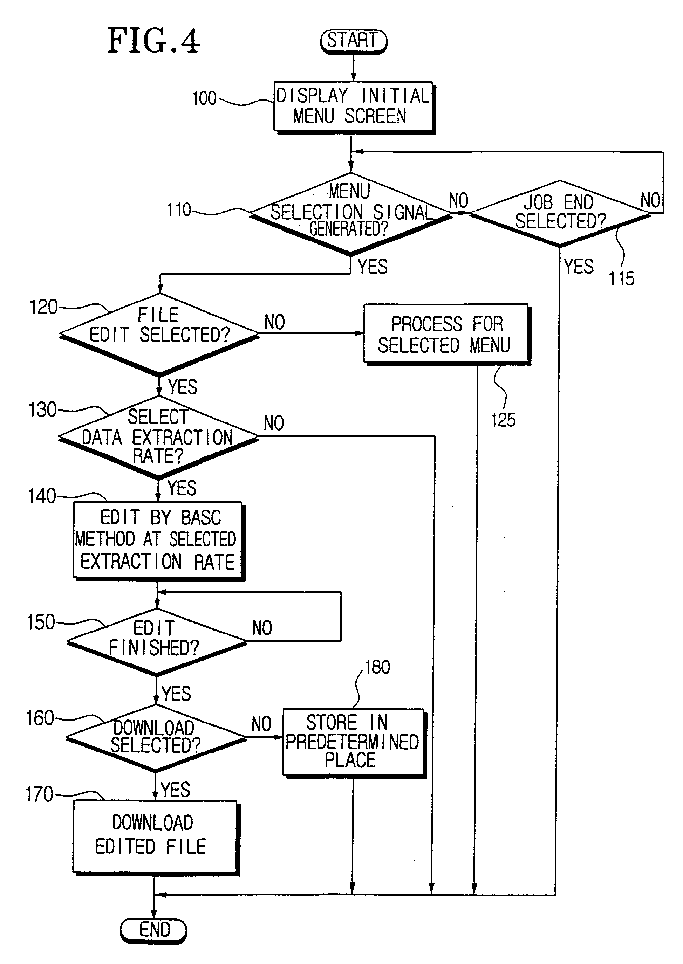

The process of editing an audio file according to a user's desired scale using the audio editor program 18 will be described below with reference to Figures 1 to 4.

First, when the audio editor program 18 is executed, an initial screen (see Figure 2) is displayed (step 100). On the initial screen, a menu is displayed by the menu providing portion 18a, and a file list of the memory device 16 of the computer 10 and a file list of a memory portion of an external device (i.e., portable digital audio player) connected to a communication port of the computer 10, are displayed. Simultaneously, the total memory size and the amount of memory remaining free of the memory portion of the external device are also displayed for the users reference during the editing process. If there is no external device connected to the computer 10, only the file list of the computer 10 is displayed.

When the user selects a file from the files stored in the memory device 16 of the computer 10, for example, when the user selects the "a.PCM" audio file (highlighted with a dotted line) through the manipulation of the input device 15, the editing portion 18b displays the size of the selected file, for example 4 Megabytes, in a lower portion of the display window shown in Figure 2. It should be noted here that more than one file may be selected for editing, and as such, the BSAC method is applied to all the selected files.

Next, it is determined whether a selection of a menu item is made from the menu or not (step 110). If not, then it is determined whether or not the user makes a selection, e.g. X (in the upper right corner of the display screen), for closing the initial screen to effectively end the audio editing job (step 115).

When the selection of a menu item is made from the menu in step 110, it is determined whether the EDIT menu is selected or not (step 120). If not, then the process corresponding to the selected menu item is performed (step 125).

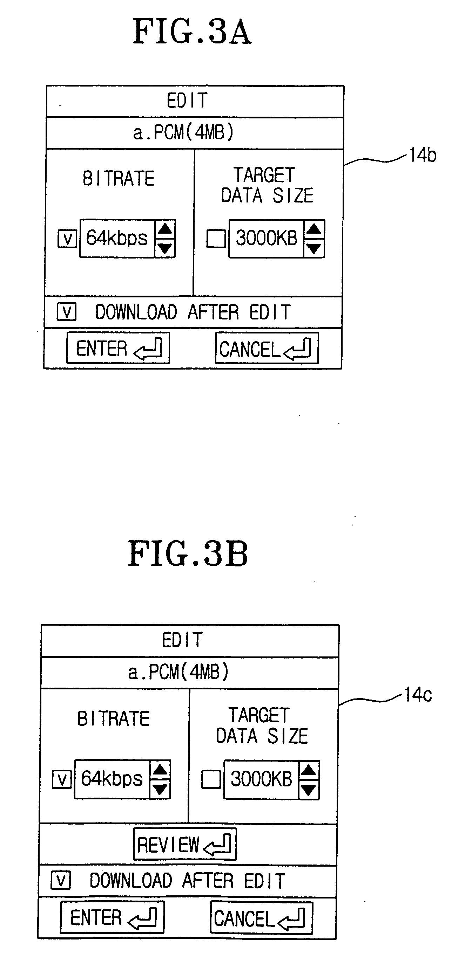

When it is determined, in step 120, that the user has selected the EDIT menu using the input device 15, a data extraction rate selection menu (see Figures 3A ^{~} 3D) is displayed. Preferably, the menu providing portion 18a provides a menu for selecting a bit rate and/or a target data size for the editing process. Here, the bit rate selecting menu is for the user's convenience to select data size and audio quality of the audio file in consideration of an audio file type. The fact to be considered is that the higher bit rate causes a higher audio quality with larger data size, while a lower bit rate causes lower audio quality but with a smaller data size.

Meanwhile, the selection menu for target data size is for the user's convenience to edit the audio file to an adjusted size which is suitable for the free capacity of the recording medium in which she/he intends to store the edited audio file. For example, the user can conveniently use this menu when she/he wants to adjust and store the audio file of more than 3 megabytes in a portable digital audio player having a free capacity of 3 megabytes.

As shown in Figure 3A, a data extraction rate selecting dialog 14b displays the name "a.PCM" of the file selected for editing, a bit rate selecting spin edit control, a target data size selecting spin edit control, and a post-edit process selection checkbox.

In a second embodiment, as shown in Figure 3B, a preview button is also provided in data extraction rate selecting dialog 14c to allow the user to sample or preview the quality of the audio file according to the selected bit rate or target size prior to editing and downloading.

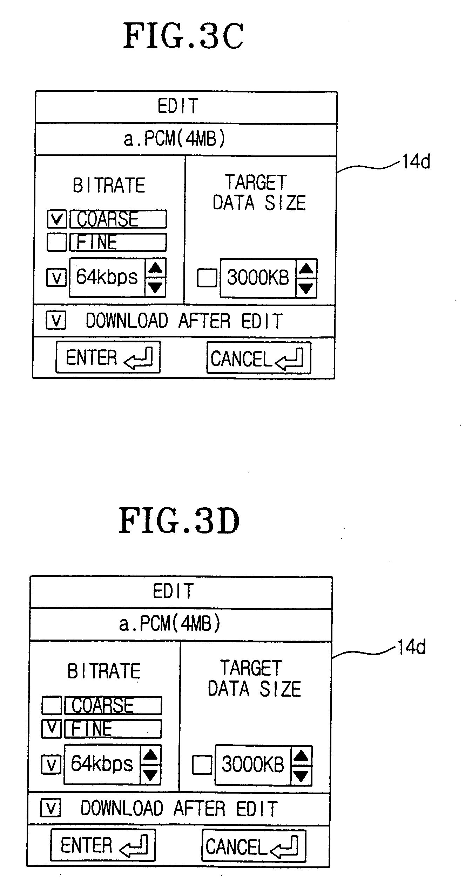

In a third embodiment, as shown in Figures 3C and 3D, a data extraction rate selecting dialog 14d displays the name "a.PCM" of the file to be edited, a bit rate selecting spin edit control, a target data size selecting spin edit control, coarse and fine adjustment checkboxes associated with the bit rate selecting spin edit control and a post-edit process selecting checkbox. It should be apparent that the third embodiment could also include a preview button as shown in Figure 3B.

If it is determined that the data extraction rate has been selected in step 130, by selecting one of the bit rates or target sizes (described in more detail below), the editing portion 18b edits the audio file by the layered Bit Sliced Arithmetic Coding (BSAC) method (step 140) according to the bit rate or target size set by the user through the extraction rate selecting dialog of Figures 3A ^{~} 3D.

After completion of the editing, if it is determined that downloading has been selected (steps S150 and S160), the edited audio file is downloaded to the digital audio player connected to the computer 10 (step 170). With respect to Figure 3B, however, if the user desires to audibly preview the results of the editing the user clicks the preview button after selecting one of the bit rates or target sizes, then a portion of the audio file is edited (encoded) by the BSAC method and stored in, for example, a temporary file. The encoded audio portion is then automatically decoded and audibly played. If the user accepts the quality of the edited audio, then the user may select the download function, and after clicking of the "enter" (i.e. OK) button on the dialog 14c, the entire file is edited by the BSAC method and downloaded (steps 140 through 170).

Meanwhile, when the downloading is not selected in step 160, a new window (not shown) is displayed requesting the user to name the edited data file, which is then stored (step 180).

Referring again to Figures 3A ^{~} 3D, the bit rate is preferably selectable in 1Kbps steps, while the target data size is selectable in 1 kilobyte steps. However, the bit rate may also be selectable in steps greater or less than 1Kbps, for example, 8 Kbps, and the target data size may be selectable in steps greater or less than 1Kbyte, for example, 500 Kbytes, with the support of the bit sliced codec program of the editing portion 18b.

When the user wants to select only a bitrate for the audio file, she/he manipulates bit rate selecting spin edit control by clicking on its up and/or down arrows to select her/his desired bit rate. When the user sees her/his desired bit rate in the bit rate selecting spin edit control, she/he stops manipulating the bit rate selecting spin edit control, and clicks on a selection confirmation checkbox at the left of the bit rate selecting spin edit control to mark a check mark (V) therein. When the user sees the check mark (V) in the selection confirming box, she/he selects whether to download or not, and clicks if necessary on the download checkbox.

When the bit rate selecting spin edit control is manipulated by the user, the display for target data size may change to display a value corresponding to the displayed bit rate. Accordingly, where the target data size display is limited to displaying only the values separated by the default step size of, for example, 500Kbytes, *i.e*., 0, 500, 1000...6000 KB, the displayed target data size will not be limited to the these values by will show that actual file size corresponding to the selected bit rate.

Additionally, when a user manipulates the scroll bar corresponding to the target data size, then the display corresponding to the bit rate value may change to display a bit rate corresponding to the displayed target data size, which may be outside the default bit rate interval.

In the third embodiment the bit rate is preferably selected at 1Kbps intervals for fine adjustment and the bit rate is preferably selected at 8Kbps intervals for coarse adjustment. Accordingly, when the coarse adjustment checkbox is checked, as shown in Figure 3C, manipulation of the bit rate spin edit control will display bit rates in 8Kbps steps, i.e., 8, 16, 24, 32, 40, 48, 56, 64...n Kbps. When the fine adjustment checkbox is checked, as shown in Figure 3D, manipulation of the bit rate spin edit control will display bit rates in 1Kbps steps, *i.e.,* of 1, 2, 3, ..., 62, 63, 64...n Kbps. And, as described above, when the spin edit control for the bit rate is manipulated by the user, the displayed target data size may change to display a value corresponding to the displayed bit rate.

As will described below, the encoded audio data will include a header that contains bitrate information. Accordingly, the selected bit extraction rate, for example, 8Kbps per layer and the value of the highest layer, for example 64 Kbps, will be included in the header of the encoded audio signal.

When the audio file selected for downloading has already been generated by the layered BSAC method, extraction is performed from a layer corresponding to the selected bit rate.

When the user wants to play the edited file, she/he selects her/his desired file and clicks play button 27. Accordingly, the audio editor program 18 decodes the selected audio file, and outputs the file to an audio output device (not shown) such as a speaker connected to the computer 10.

As described above, the audio editor program 18 according to the present invention can be recorded in a recording medium for use. Also, when the audio editor program 18 is installed in the computer 10, the user can edit audio files on the computer 10 to a desired size. After editing the audio file by the layered BSAC method as she/he wishes, the user can use the audio file by downloading the edit completed file to a memory of a portable digital audio player having a device capable of decoding and playing the audio file.

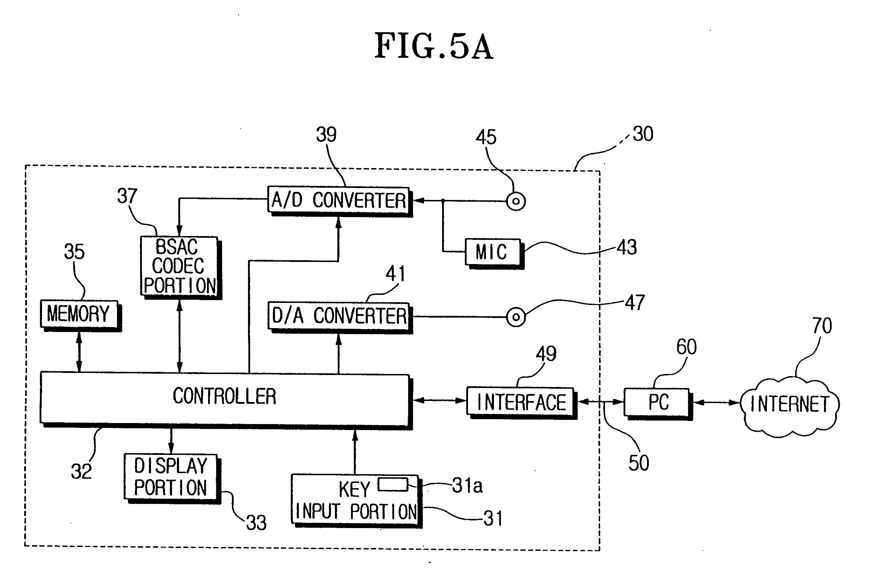

According to another aspect of the present invention, a digital audio player may edit an audio file by itself. As shown in Figure 5A, the digital audio player 30 is connected to a computer 60, connected to the Internet 70, via a communication interface 50. Thus, it is not necessary for the computer 60 to include the editing portion 18b of Figure 1.

The digital audio player 30 includes a key input portion 31, a controller 32, a display portion 33, a memory 35, a bit sliced codec portion 37, an A/D converter 39, a D/A converter 41, and an interface 49. The player 30 also includes an internal microphone (MIC) 43, an analog audio signal input terminal 45 and an analogue audio signal output terminal 47.

It is preferable that the interface 49 be constructed to perform bi-directional communication with the computer 60 through a parallel port of the computer 60 such as a parallel port for a printer, or a serial port such as a USB port, and an appropriate cable 50.

Alternatively, the interface 49 is constructed to perform bi-directional communication with the computer 60 or an external device by a wireless communication method, e.g. Bluetooth or irDA.

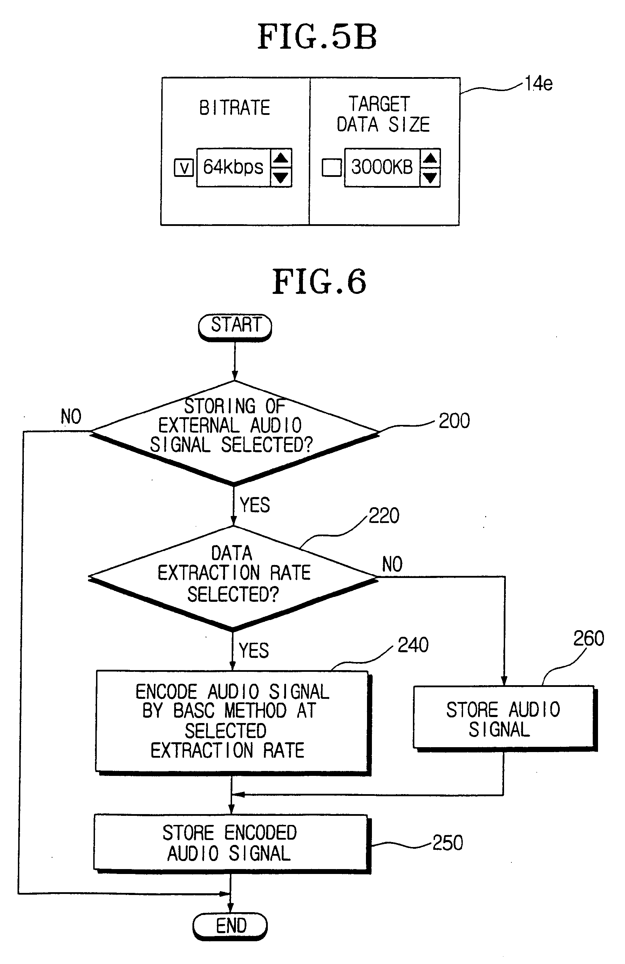

The key input portion 31 includes a plurality of keys for setting various supporting functions. The key input portion 31 also includes an key 31a for processing and storing a received audio signal at a desired extraction rate. Key 31a may be termed an options key for displaying a plurality of menu options on the display portion 33, wherein one of the displayed options may be an editing or encoding option which will cause the display portion 33 to display a screen similar to that shown in Figure 5B. Additionally, key 31a may be termed an editing key which will cause display portion 33 to immediately display a screen similar to that shown in Figure 5B. The display portion 33 displays information received from the controller 32. The controller 32 processes signals input through the key input portion 31, and accordingly controls the components of the player 30.

Furthermore, the key input portion 31 preferably includes save, play, stop, and record keys which are not shown in the drawings. The keys can be separately formed, or one key can have a plurality of functions which are distinguishable by the manner of the manipulation thereof.

The A/D converter 39 converts an analogue signal input through the input terminal 45 or through the microphone (MIC) 43 into a digital signal.

The D/A converter 41 converts a digital signal output from the controller 32 into an analogue signal, and outputs the analogue signal through the output terminal 47. There can be a plurality of output terminals 47 formed for connecting an earphone, an external device, etc.

The bit sliced codec 37 includes an encoder for performing an encoding process by the layered BSAC method and a decoder for performing a decoding process for the encoded signal by the layered BSAC method.

When an edit signal is input, the controller 32 provides a screen for displaying the amount of free memory remaining in memory 35, and a bit rate and/or a target data size selecting menu on the display portion 33. Note, however, that controller 32 could provide information with respect to the amount of free memory space available in memory 35 at all times, that is, prior to the activation of key 31b.

Considering the relatively small display capacity of the display portion 33 of the digital audio player 30, the screen providing the bit rate selection and/or target data size selection dialog can be sequentially displayed according to a screen move manipulation of the key input portion 31. The intervals of the bit rate and target data size selections are applied with the same as described above with respect to Figures 1-4.

When a data extraction rate is selected using the key input portion 31, the controller 32 extracts the audio data input through one of paths of the input portion, i.e., microphone 43, input terminal 45, and interface 49, according to the layered bit sliced arithmetic coding method, and stores the extracted data in the memory portion, i.e., in the memory 35.

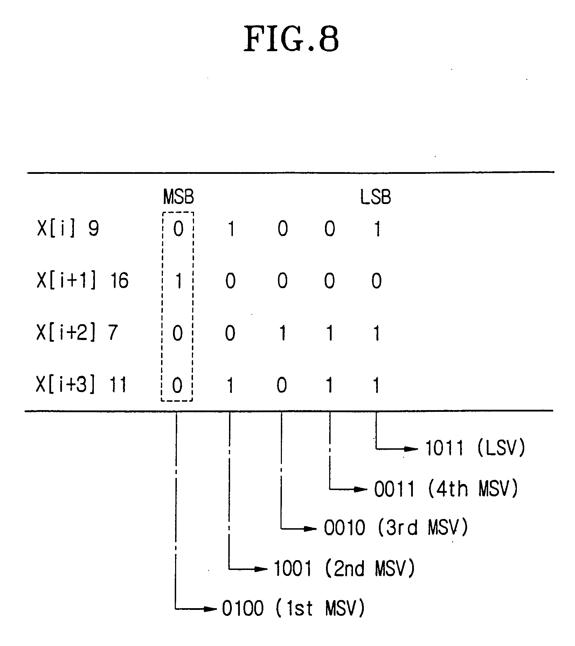

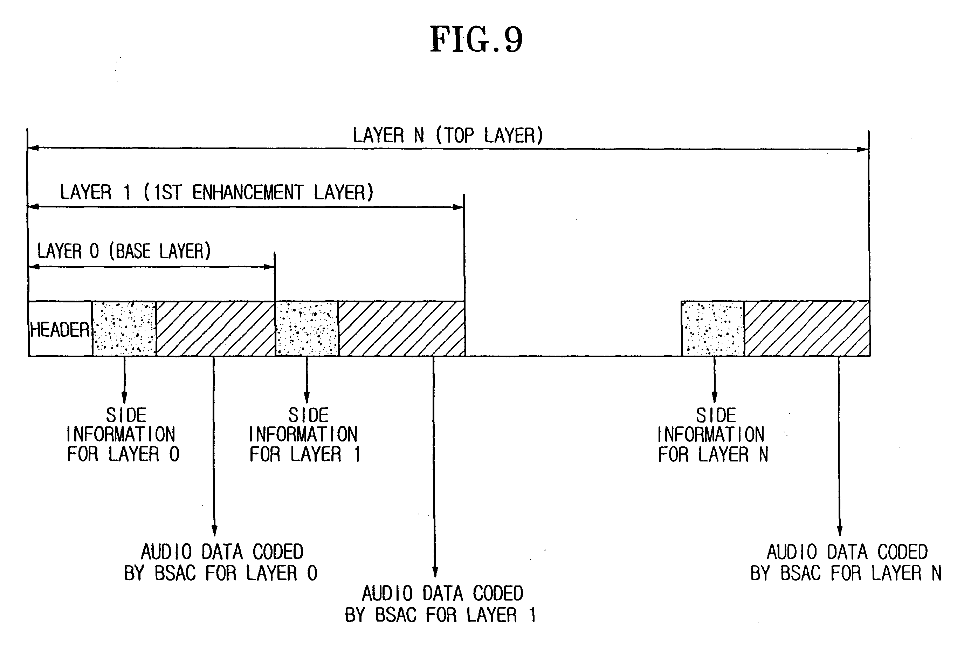

For example, when bit stream audio data generated by the layered BSAC method is input from the computer 60 through the interface 49, the controller 32 stores the data in the memory 35 until the bit rate of the layer reaches the selected rate, or until the bytes of the data reach the selected target data size. After reaching the selected rate or bytes, the data is not stored, as will be better understood from the discussion of Figures 8 and 9, below.

However, when the data input through the interface 49 is determined to be in audio data formats other than the layered BSAC, such as a pulse code modulation (PCM), the controller 32 loads the bit sliced codec portion 37 to encode the data according to the layered BSAC method to a predetermined extraction rate. Then the controller 32 stores the data in the memory 35. The type of the audio data can be determined from header information. That is, bitrate information is contained in the header. Accordingly, the selected bit extraction rate, for example, 8Kbps per layer and the value of the highest layer, for example 64 Kbps, will be included in the header of the encoded audio signal. Thus, a method exhibiting the best efficiency in reproducing the encoded audio data can be obtained by accessing the information stored in the header. For example, when audio data is encoded by an encoder at a bitrate of 96 Kbps, for example, the best quality sound can be restored by a decoder corresponding to the encoder having a bitrate of 96 Kbps.

When the data is an analogue signal input through the microphone 43 or the input terminal 45, the data is converted into digital data which is sampled at a predetermined sampling rate by the A/D converter 39. Then, the data is encoded by the bit sliced codec portion 37 according to a selected extraction rate, and stored in the memory 35.

A data editing process of the digital audio player will be described below with reference to Figure 6. Here, it should be understood that the user has preferably already selected either a desired data extraction rate by selection of a bit rate or a target data size using, for example, the data extraction rate selecting dialog 14e of Figure 5B. It should also be understood that, although Figures 5A and 5B relate to a portable digital audio player, the digital audio player can also be computer generated and displayed on a screen of the computer having an options key 31a, and activation of the options key would result in a display as shown in Figure 2 and activation of the edit key on the menu bar would result in a display either as shown in Figure 5B or as shown in any of Figures 3A - 3D.

First, it is determined whether a store select signal is input with respect to an external audio signal or not (step 200). Here, the external signal is a signal input through the input portion, i.e., through the interface 49, microphone 43, or input terminal 45. Also, the store select signal includes a signal generated from manipulation of, for example, a store or record key, on the key input portion 31, and a control signal indicating the beginning of a download from outside.

When the storing select signal is input; it is determined whether or not the data extraction rate is selected (step 220). When the data extraction rate is determined to be selected, the received audio signal is encoded by the layered bit sliced arithmetic coding (BSAC) method according to the selected extraction rate (step 240). The encoded audio signal is then stored in the memory 35 (step 250).

Meanwhile, when the received audio signal is already bitstream coded by the layered BSAC method, the data is stored until the bit rate layer of the received signal reaches the selected extraction rate corresponding to either the selected bit rate or selected target data size, which means step 240 will be omitted in this case.

When it is determined that the extraction rate is not selected in step 220, the received audio signal is directly stored in the memory 35 (step 260). Alternatively, in step 260 the audio signal may be encoded by the bit sliced arithmetic coding method according to a predetermined default bitrate and then stored in memory 35.

The process of encoding audio data by the layered bit sliced arithmetic coding method with the bit sliced codec 37 or the audio editor program 18 according to the predetermined extraction rate according to the present invention will be described below in greater detail. Meanwhile, note that the layered BSAC coding and decoding methods as employed in the present invention are similarly disclosed in US-A-6122618 and US-A-6148288.

First, the layered bit sliced encoding and decoding methods will be schematically described.

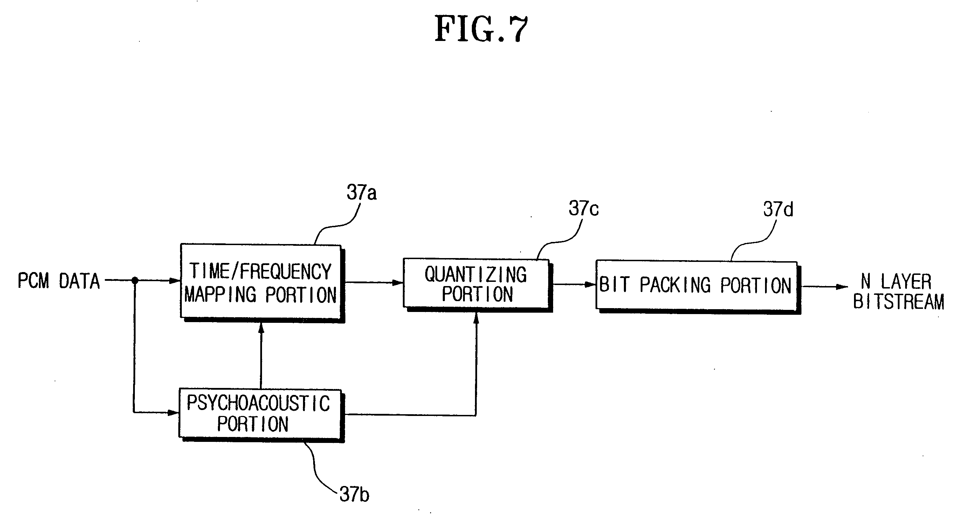

Referring to Figure 7 showing the bit sliced encoder of the bit sliced codec portion 37, the layered bit sliced encoder includes a time/frequency mapping portion 37a, a psychoacoustic portion 37b, a quantizing portion 37c, and a bit packing portion 37d.

The time/frequency mapping portion 37a converts audio signals of a temporal domain into signals of a frequency domain. The signals in the frequency domain greatly differ from each other according to a human psychoacoustic model (e.g. ISO/IEC 1117 2-3) from a signal perceptible by a human to a signal imperceptible. Accordingly, by differing the bits allocated in the respective frequency bandwidths, the compression efficiency can be increased.

The psychoacoustic portion 37b couples the converted signals by signals of predetermined subbands by the time/frequency mapping portion 37a and calculates a masking threshold at each subband using a masking phenomenon generated by interaction with the respective signals. With the masking threshold, a minimum level of signal, which has sound but imperceptible to the human due to the size of the input signal and interaction of the respective signals, can be obtained.

The quantizing portion 37c quantizes the signals for each predetermined coding band so that the quantization noise of each band becomes smaller than the masking threshold. In other words, the frequency signals of each band are applied to scalar quantization so that the magnitude of the quantization noise of each band is smaller than the masking threshold, so as to be imperceptible. Quantization is performed so that the Noise-to-Mask Ratio (NMR) value, which is a ratio for the masking threshold calculated by the psychoacoustic portion 37b to the noise generated at each band, is less than or equal to 0 dB. The NMR value less than or equal to 0 dB means that the masking threshold is higher than the quantization noise. In other words, the quantization noise is not audible.

In order to accomplish the scalable audio codec, the bit packing portion 37d combines the frequency data quantized by the quantizing portion 37c with side information about the respective subbands and the quantized information of the audio data according to the bitrate of the respective layers.

Figure 8 shows an example where the value quantized to 5 bits is represented in a binary notation. According to the layered method, the most significant bits are coupled and first encoded. For example, when encoding in 4 bit unit, the binary numbers 0100 (blocked by dots) (corresponding to the Most Significant Vector; MSV) are first encoded. Then the encoding is proceeded one vector by vector to the least significant bits. In such a situation, the bits are efficiently compressed into codes by using a proper probability distribution and arithmetic coding method. The bitstream structure generated by the above methods is shown in Figure 9.

That is, the encoder encodes the audio signal into a layered bitstream structure consisting of a base layer (layer 0) and a plurality of enhancement layers. Each layer consists of a header region, side information writing region, and a data region.

The base layer has the lowest bit rate, and the next enhancement layer has the bit rate higher than the base layer by predetermined intervals of bit rate. In this manner, the enhancement layers have increasing bit rates at certain intervals.

Only the MSBs are represented in the forehand of the base layer, so that only the contour for the all frequency components is encoded. As more bits are represented in lower bits, more detailed information can be expressed. Since detail information data values are encoded according to increasing bitrates, i.e., enhancement of layers, and audio quality can be improved.

Next, a method for constructing a scalable bitstream using the data expressed as above will be described. First, among side information to be used for the base layer, quantization bit information for each quantizing band is encoded. The quantized values are sequentially encoded from the MSBs to the LSBs, and from low frequency components to high frequency components. If quantiztion bits of a certain band are less than those of the band being currently encoded, encoding is not performed. When quantization bits of the band equal to those of the band being currently encoded, encoding is performed. Here, if there is no band restriction in encoding signals of the respective layers, sound objectionable to the ear may be generated. This is because signals are on and off when restoring signals of the layers having low bitrates, in the case of performing encoding from the MSB to the LSB, irrespective of bands. Thus, it is advisable to restrict bands appropriately according to bitrates.

After the base layer is encoded, the side information and quantized value of audio data for the next enhancement layer are encoded. In such a manner, data of all layers corresponding to the selected bit rate are encoded. The thus encoded information is collected altogether to form a bitstream.

As shown in Figure 9, the bitstream made by the encoder has a layered structure in which the lowest layer bitstream is contained in the higher layer bitstream.

The audio signal with such a layered structure is coded from more important signal components to a less important signal components. Using the thus-formed bitstreams, bitstreams having a low bitrate can be formed by simply rearranging the low bitrate bitstreams contained in the bitstream having the highest bitstream, by a user's request. In other words, bitstreams formed by encoder on a real time basis, or bitstreams stored in a medium, can be rearranged to be suitable for a desired bitrate by a user's request, to then be transmitted. Also, if the user's hardware performance is poor or the user wants to reduce the complexity of a decoder, even with appropriate bitstreams, only some bitstreams can be restored, thereby controlling the complexity.

For example, when bitrate is selected to 64 Kbps, the bitstream is constitute for top layer to be 64 Kbps from the predetermined base layer. Accordingly, in forming a scalable bitstream, the bitrate of a base layer is 16 Kbps, that of a top layer is 64 Kbps, and the respective enhancement layers has bitrate intervals of 8 Kbps, that is, the bitstream has 7 layers of 16, 24, 32, 40, 48, 56 and 64 Kbps. Since the bitstream formed by the encoder has a layered structure, the bitstream of the top layer of 64 Kbps contains the bitstreams of the respective layers (16, 24, 32, 40, 48, 56 and 64 Kbps). If a user requests data for the top layer, the bitstream for the top layer is transmitted without any processing thereof. Also, if another user requests data for the base layer (corresponding to 16 Kbps), only the forehand bitstreams are simply transmitted.

The respective layers have limited bandwidths according to bitrates, and the end quantization bands are different. When input data is a PCM data sampled at 48 KHz, and the magnitude of one frame is 1024, the number of bits usable for one frame for a bitrate of 64 Kbps is 1365.3333 (=64000 bits/sec x (1024/48000)) on the average. Similarly, the number of bits usable for one frame can be calculated according to the respective bitrates.

When an extraction rate is selected, the bitrate of the top layer for the selected extraction rate is determined, and accordingly, bitstreams are generated from the bitrates of the base layer to the targeting layer at selected bitrate intervals by the encoding process according to the layered BSAC method.

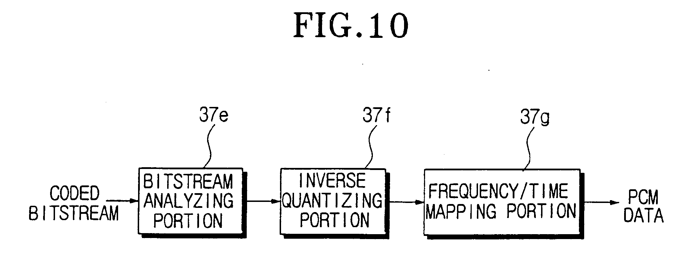

As shown in Figure 10, the decoder includes a bitstream analyzing portion 37e, an inverse quantizing portion 37f, and a frequency/time mapping portion 37g.

The bitstream analyzing portion 37e performs decoding process by an order that the respective layers are generated. Also, the bitstream analyzing portion 37e performs decoding process for the respective layers by an order of importance of the bits of the respective bitstreams.

The inverse quantizing portion 37f restores the data decoded by the bitstream analyzing portion 37e into a signal of an original magnitude.

The frequency/time mapping portion 37g converts audio signal inverse-quantized to be in a frequency domain to signal in a temporal domain.

The decoded signal is converted to analogue signal through the D/A converter and output through the output terminal 47 during playing process.

As described above, according to the audio data editing method and recording medium employing the editing method, and digital audio player of the present invention, since the audio data file can be efficiently edited at any scale, the memory capacity of the digital audio devices can be utilized more efficiently.

## Claims

1. A digital content playback apparatus, the apparatus comprising:
a receiver configured to receive encoded digital content;
a Bit Sliced Arithmetic Coding (BSAC) decoder that decodes the received digital content;
an inverse quantizer that performs inverse quantization on the decoded digital content; and
a frequency/time mapper that converts the inverse quantized digital content from frequency domain to time domain.

2. The apparatus of claim 1, wherein the encoded digital content is in BSAC format.

3. The apparatus of claim 1, wherein the encoded digital content is in a format other than BSAC format.

4. The apparatus of claim 3, wherein the playback apparatus further comprising:
a BSAC encoder, wherein the BSAC encoder converts the encoded digital content into BSAC format;
the BSAC decoder decoding the BSAC formatted digital content.

5. The apparatus of claim 1, wherein the BSAC encoder (or codec) is configured to truncate the received digital content into BSAC formatted digital data.

6. The apparatus of claim 1, wherein the apparatus is a portable digital content playback apparatus.

7. A digital content playback apparatus, the apparatus comprising:
a receiver configured to receive encoded digital content;
a decoder that decodes the digital content by selectively decoding bits representing the encoded digital content, wherein the bits are rearranged in an order of importance and formatted into a plurality of layers, the bits being selectively decoded by an order that each of the plurality of layers is generated and by the order of importance of each bit;
an inverse quantizer that performs inverse quantization on the decoded digital content; and
a frequency/time mapper that converts the inverse quantized digital content from frequency domain to time domain.

8. The apparatus of claim 7, wherein the encoded digital content is in BSAC format.

9. The apparatus of claim 7, wherein the encoded digital content is in a format other than BSAC format.

10. The apparatus of claim 9, wherein the playback apparatus further comprising:
a BSAC encoder, wherein the BSAC encoder converts the encoded digital content into BSAC format;
the BSAC decoder decoding the BSAC formatted digital content.

11. The apparatus of claim 7, wherein the BSAC encoder (or codec) is configured to truncate the received digital content into BSAC formatted digital data.

12. The apparatus of claim 7, wherein the apparatus is a portable digital content playback apparatus.

13. A digital content playback apparatus, the apparatus comprising:
a receiver configured to receive digital content;
an encoder that encodes by digital content by rearranging bits representing the received digital content by an order of importance and formatting the bits into a plurality of layers based on the order of importance of each bit; and
a storage for storing the encoded digital content.

14. The apparatus of claim 13, wherein the encoded digital content is in BSAC format.

15. The apparatus of claim 13, wherein the encoded digital content is in a format other than BSAC format.

16. The apparatus of claim 15, wherein the playback apparatus further comprising:
a BSAC encoder, wherein the BSAC encoder converts the encoded digital content into BSAC format;
the BSAC decoder decoding the BSAC formatted digital content.

17. The apparatus of claim 13, wherein the BSAC encoder (or codec) is configured to truncate the received digital content into BSAC formatted digital data.

18. The apparatus of claim 13, wherein the apparatus is a portable digital content playback apparatus.

19. A digital content playback apparatus, the apparatus comprising:
a receiver configured to receive encoded digital content, wherein the digital content is encoded in a format other than BSAC format;
a BSAC codec comprising a BSAC encoder and a BSAC decoder, wherein the BSAC encoder converts the received digital content to BSAC format and the BSAC decoder decodes the BSAC formatted digital content;
an inverse quantizer that performs inverse quantization on the decoded digital content; and
a frequency/time mapper that converts the inverse quantized digital content from frequency domain to time domain.

20. The apparatus of claim 19, wherein the encoded digital content is in BSAC format.

21. The apparatus of claim 19, wherein the encoded digital content is in a format other than BSAC format.

22. The apparatus of claim 21, wherein the playback apparatus further comprising:
a BSAC encoder, wherein the BSAC encoder converts the encoded digital content into BSAC format;
the BSAC decoder decoding the BSAC formatted digital content.

23. The apparatus of claim 19, wherein the BSAC encoder (or codec) is configured to truncate the received digital content into BSAC formatted digital data.

24. The apparatus of claim 19 is a portable digital content playback apparatus.

25. A digital content playback apparatus, the apparatus comprising:
a receiver configured to receive encoded digital content;
a decoder that decodes the digital content by selectively decoding bits representing the encoded digital content, wherein the bits are rearranged by an order of importance and formatted into a plurality of layers, wherein each layer comprises a group of bits having the same order of importance, at least one layer is selected for decoding based on a selected bit rate and based on the order of importance of bits contained in each layer, the decoder decodes the selected layers by an order that the plurality of layer are generated;
an inverse quantizer that performs inverse quantization on the decoded digital content; and
a frequency/time mapper that converts the inverse quantized digital content from frequency domain to time domain.
